# NEUE EUROPÄISCHE PATENTSCHRIFT

(11) **EP 0 526 770 B2**
(45) Veröffentlichungstag und Bekanntmachung des Hinweises auf die Entscheidung über den Einspruch: **10.07.2002**
(45) Hinweis auf die Patenterteilung: 05.07.1995
(21) Anmeldenummer: 92111886.5
(22) Anmeldetag: 13.07.1992
(51) Int. Cl.: C04B 7/43, F27B 7/20, F27D 13/00

(54) **Anlage zur thermischen Behandlung von mehlförmigen Rohmaterialien**
Thermic treatment installation for raw fines
Installation pour le traitement thermique de fines crues

(30) Priorität: 13.07.1991 DE 4123306
(43) Veröffentlichungstag der Anmeldung: 10.02.1993
(73) Patentinhaber: KHD Humboldt Wedag AG, 51105 Köln (DE)
(72) Erfinder: Bauer, Claus, W-5000 Köln (DE)

(56) Entgegenhaltungen:
- EP-A- 0 222 044
- EP-A- 0 327 717
- WO-A-92/03691
- DE-A- 3 735 825
- DE-A- 3 817 357
- FR-A- 2 280 601
- FR-A- 2 368 447
- GB-A- 1 563 918
- GB-A- 2 069 669
- US-A- 4 080 218
- ZKG Bd. 38, Nr. 2, Februar 1985, Seiten 55 - 66 A.SCHEUER 'Bildung und Abbau von NO in Zementofenanlagen'
- Zement-Kalk-Gips Nr.7/1986, Seite 365

## Beschreibung

Die Erfindung betrifft eine Anlage zur thermischen Behandlung von mehlförmigen Rohmaterialien, insbesondere bei der Herstellung von Zementklinker aus Zementrohmehl, nach dem Oberbegriff des Ansprüchs 1.

Um bei Anlagen zur Herstellung von Zementklinker aus Zementrohmehl unwirtschaftlich lange und/oder im Durchmesser große Drehrohröfen zu vermeiden und den spezifischen Wärmebedarf des Zementklinkerherstellungsprozesses niedrig zu halten, ist es bekannt, dem Drehrohrofen materialflußseitig gesehen einen Calcinator vorzuschalten, der mit einer Zweitfeuerung ( neben der Feuerung im Drehrohrofen ) ausgestattet ist. In der Zweitfeuerung entzündet sich der zugeführte Brennstoff jeglicher Art und wird in der Regel mit vom Klinkerkühler kommender heißer Abluft, Tertiärluft genannt, möglichst vollständig verbrannt. Die entstehende Verbrennungswärme wird augenblicklich auf das Rohmehl übertragen und zur weiteren Calcinierung des Rohmehls noch vor Einführung in den Drehrohrofen verwendet, wobei die Temperatur nicht wesentlich über die Dissoziationstemperatur der Entkarbonatisierungsreaktion steigt.

Ist der in den Calcinator zugefeuerte Brennstoff ein Festbrennstoff, z. B. Kohlenstaub, und ist dieser nicht ausreichend fein gemahlen und/oder enthält dieser schwerbrennende Anteile wie z. B. Anthrazit, so ist die Gefahr nicht ausgeschlossen, daß der Brennstoff im Calcinator nicht vollständig ausbrennt, weil die Verweilzeit der unverbrannten Bestandteile, nämlich nicht ausreichend ausgebrannte Festbrennstoffpartikel und/oder z. B. durch unvollständige Verbrennung gebildetes CO, im Calcinator zu kurz werden kann. In den meisten Fällen gelang es, den Restausbrand dieser zunächst nicht vollständig verbrannten Bestandteile durch eine besondere konstruktive Gestaltung der Brennstrecke des Calcinators, nämlich durch eine Umlenkung der Calcinatorbrennstrecke bzw. der Drehofenabgassteigleitung in einem Winkel von z. B. 90 bis 180° zu bewerkstelligen, weil in dem Rohrleitungskrümmer noch eine Vermischung der Restbrennstoffe mit Luftsauerstoff zur Förderung des Restausbrandes bei vertretbar niedrigem Druckverlust erfolgt. Es hat sich aber in der Praxis gezeigt, daß es Fälle gibt, bei denen der Rohrleitungskrümmer allein nicht genügt, den Restausbrand der unverbrannten Umsetzungsprodukte des Calcinatorbrennstoffs zu erreichen, besonders beim Einsatz schwerbrennbarer Kohlesorten und/oder auch bei schwankender Festbrennstoffzudosierung zum Calcinator, welche durch die Brennanlage durchlaufende Stöße an CO und unverbrannten Brennstoffpartikeln zur Folge hat.

Auch bei Zementklinkerproduktionslinien mit Calcinator und mit unterstöchiometrischer Brennstoffverbrennung in der Drehofenabgassteigleitung zwecks Schaffung einer CO-haltigen Reduktionszone zur Reduzierung des im Abgas enthaltenen NOₓ ( EP-PS 0 222 044 ) muß dafür gesorgt werden, daß das in der Reduktionszone katalytisch wirkende CO sowie gegebenenfalls auch die im Calcinator zunächst nicht verbrannten Festbrennstoffpartikel noch im Calcinator selbst Gelegenheit erhalten, vollständig verbrennen zu können.

Der eingangs zitierte Oberbegriff des Anspruchs 1 dieser Patentanmeldung nimmt Bezug auf die ältere nicht vorveröffentlichte deutsche Patentanmeldung DE-A-4026814, die der EP-A-497937 entspricht, in der vorgeschlagen worden ist, bei einer Zementklinkerproduktionslinie im Calcinator an der Stelle, an der bisher ein Rohrleitungskrümmer mit Umlenkung der Gas-Feststoffsuspension um z. B. 180° vorhanden gewesen ist, also im Bereich der höchsten Stelle des Calcinators eine Wirbelkammer anzuordnen, deren Wandung im unteren Bereich eine Öffnung zum tangentialen Eintritt der Gas-Feststoffsuspension und im oberen Bereich eine Öffnung zum tangentialen Austritt aufweist, wobei die Wirbelkammer eine sehr gute Vermischung des in der Gas-Feststoffsuspension des Calcinators enthaltenen CO sowie der gegebenenfalls enthaltenen nicht verbrannten Brennstoffpartikel mit Luftsauerstoff ermöglicht, wodurch das CO sowie die Brennstoffpartikel vollständig noch im Calcinator verbrennen können, so daß sich die gesamte Strecke bzw. gesamte Bauhöhe des Calcinators gegenüber den bisher üblich gewesenen eingangs erwähnten Calcinatoren um z. B. etwa 20 % durchaus verkürzen läßt.

Der Erfindung liegt die Aufgabe zugrunde, die den Oberbegriff des Anspruchs 1 bildende Zementklinkerproduktionslinie mit im Calcinator angeordneter Wirbelkammer hinsichtlich Druckverlust in der Wirbelkammer sowie der Möglichkeit, in der Wirbelkammer eine gezielte NOₓ-Reduktion der Calcinator- ( und Drehrohrofen- ) Abgase zu bewirken, weiter zu verbessern.

Diese Aufgabe wird gemäß der Erfindung mit den Maßnahmen des Kennzeichnungsteils des Anspruchs 1 gelöst.

Die beim Calcinator der erfindungsgemäßen Zementklinkerproduktionslinie etwa im Bereich der höchsten Stelle angeordnete Wirbelkammer weist in ihrem oberen Bereich eine Öffnung zum tangentialen Eintritt der vom aufsteigenden Ast der Calcinierstufe kommenden Gas-Feststoffsuspension und an ihrer Unterseite eine zentrale Öffnung zum gemeinsamen Austrag der verwirbelten Gas-Feststoffsuspension in den absteigenden Ast der Calcinierstufe auf. Bei der in der zylindrischen Wirbelkammer mit vertikaler Achse erzwungenen Rotationsströmung ist infolge der sehr guten Vermischung der Gas-Feststoffuspension und dem O₂-haltigen Gas ein weitestgehend vollständiger Ausbrand bzw. Restausbrand der im aufsteigenden Ast der Calcinierstufe unverbrannt gebliebenen Brennstoffbestandteile wie z. B. CO und Restkohlenstoff bei verlängerter Verweilzeit der Gas-Feststoffsuspension im durch den Raum der Wirbelkammer vergrößerten Reaktionsvolumen gewährleistet. Dadurch kann der bei der Brennstoffverbrennung in der Calcinierstufe notwendige Luftüberschuß gesenkt werden. Trotz dieser Vorteile ist die zyklonartige Wirbelkammer mit gemeinsamem Abzug der verwirbelten Gas-Feststoffsuspension durch eine zentrale Öffnung an der Unterseite der Wirbelkammer durch einen vergleichsweise geringen Druckverlust gekennzeichnet. Infolge der starken Rotationsströmung in der Wirbelkammer, deren Durchmesser das 1,2- bis 2-fache des Durchmessers der gasführenden Rohrleitungen der Calcinierstufe ( aufsteigender und absteigender Ast ) betragen kann, ist die Gefahr von Feststoffanbackungen und Verstopfungen minimiert, wodurch eine hohe Betriebssicherheit gewährleistet ist.

Außerdem wird durch die Wirbelkammer des erfindungsgemäßen Calcinators mit erzwungener starker Rotationsströmung die Möglichkeit eröffnet, im Zentrum der Wirbelkammer eine feststoffarme ( staubarme ) Kernzone gegebenenfalls erhöhter Temperatur zu schaffen, die Gastemperatur in dieser Kernzone durch gesteuertes Eindüsen von Brennstoff von der Oberseite der Wirbelkammer her konstant zu halten und diese Kernzone gesteuerter Temperatur mit einer Einrichtung zur Eindüsung von Reaktanten wie NH₃ oder Ammoniakwasser zwecks zusätzlicher Absenkung des in den Abgasen enthaltenen NOₓ auszustatten. Somit kann in der staubarmen Kernzone der Wirbelkammer eine wirkungsvolle Absenkung des im Abgas enthaltenen NOₓ aus der Feuerung des Drehrohrofens ( hierbei hauptsächlich thermisches NOₓ) und aus der Feuerung des Calcinators ( hierbei hauptsächlich Brennstoff-NOₓ) durchgeführt werden.

Die in der Kernzone der Wirbelkammer zu schaffende Zone erhöhter Temperatur kann auch dazu ausgenutzt werden, um darin auch andere Hochtemperaturreaktionen durchzuführen oder auch um darin sehr schwer brennende Brennstoffe wie z. B. niederflüchtige Kohlen zu verbrennen. Zu diesem Zweck kann die Gastemperatur in der Kernzone der Wirbelkammer auch auf einer noch höheren Reaktionstemperatur als z. B. ca. 1.000 bzw. 1.100° C gehalten werden. Bei dieser hohen Gastemperatur würden die Zementrohmehlteilchen an sich beginnen zu kleben und an den gasführenden Leitungen anzubacken. Diese Gefahr ist aber bei der Wirbelkammer der erfindungsgemäßen Calciniereinrichtung ausgeschlossen, weil infolge der kräftigen Rotationsströmung in der Wirbelkammer die Gutmaterialteilchen an die Peripherie der Wirbelkammer gedrängt sind, wo sie eine Temperatur bis höchstens 900° C erreichen. Durch diesen Zementrohmehlschleier sind die Wände der Wirbelkammer gleichzeitig vor einer überhöhten thermischen Beanspruchung geschützt. Die erhöhte Temperatur im Kernbereich der Wirbelkammer kann außerdem zum noch vollständigeren Umsatz des im Abgas noch vorhandenen CO zu CO₂ ausgenutzt werden.

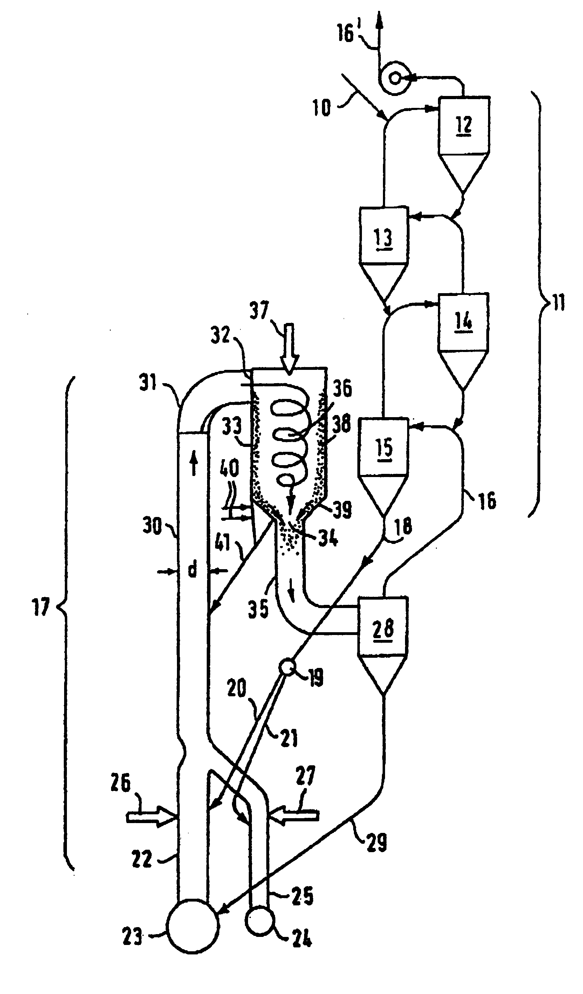

Die Erfindung und deren weitere Merkmale und Vorteile werden anhand des in der Zeichnung schematisch dargestellten Ausführungsbeispieles näher erläutert.

Die Zeichnung zeigt in schematischer Darstellung eine Anlage zur Herstellung von Zementklinker aus Zementrohmehl, das bei (10) in die Vorwärmstufe (11) aufgegeben wird, wo es nacheinander die Zyklonschwebegaswärmetauscher (12 bis 15) im kombinierten Gleich-/Gegenstrom zum heißen Abgas (16) der Calcinierstufe (17) durchwandert, um im Abscheidezyklon (15) aus dem Gasstrom ausgeschieden und durch die Zuführleitung (18) in der Rohmehlweiche (19) auf die beiden Gutzuführungsleitungen (20 und 21) aufgeteilt zu werden. Das am Zementrohmehl abgekühlte Abgas verläßt die Vorwärmstufe (11) der Anlage bei (16').

Während die Rohmehlleitung (20) in die Abgassteigleitung (22) des Drehrohrofens (23) einmündet, mündet die Rohmehlleitung (21) in die vom Klinkerkühler (24) kommende Tertiärluftleitung (25) ein. Etwa im Bereich der Rohmehleinführung ist die Drehofenabgassteigleitung (22) mit einer Brennstoffzuführung (26) und die Tertiärluftleitung (25) mit einer Brennstoffzuführung (27) versehen. Das in der Calcinierstufe (17) calcinierte ( entsäuerte ) Zementrohmehl wird im Zyklon (28) vom heißen Abgasstrom (16) abgetrennt und als hochgradig ( z. B. 95 % ) calciniertes Zementrohmehl (29) in den Drehrohrofen (23) eingeführt, in dessen Sinterzone es zu Zementklinker gebrannt wird.

Während der Brennstoff (27), z. B. Kohlenstaub, in der Tertiärluft (25) mit Sauerstoffüberschuß verbrannt wird, wird der Brennstoff (26), z. B. ebenfalls Kohlenstaub, in der Drehofenabgassteigleitung (22) unterstöchiometrisch verbrannt zwecks Bildung einer sich von der Brennstoffeinführung (26) nach oben anschließenden CO-haltigen Reduktionszone, in welcher der im heißen Drehofenabgas enthaltene NOₓ-Anteil reduziert wird. Die Abgase des Brenners (26) und des Brenners (27) werden im aufsteigenden Rohrleitungsast (30) zusammengefaßt, an den sich oben ein Rohrleitungsbogen (31) anschließt.

In der Calcinierstufe (17) ist im Bereich ihrer Strömungsumlenkung, also im Rohrleitungsbogen (31), d. h. etwa im höchstgelegenen Bereich der Calcinierstufe eine Wirbelkammer (33) mit zylindrischem Querschnitt und vertikaler Achse angeordnet. Die Wirbelkammer (33) weist in ihrem oberen Mantelbereich eine Öffnung (32) zum tangentialen Eintritt der Gas-Feststoffsuspension und an den ihrer Unterseite eine zentrale Öffnung (34) zum Austrag der verwirbelten Gas-Feststoffsuspension in den absteigenden Rohrleitungsast (35) auf, der die Gas-Feststoffsuspension dem untersten Zyklon (28) zuleitet. Der Durchmesser der Wirbelkammer (33) beträgt mit Vorteil das 1,2- bis 2-fache des Durchmesser (d) der gasführenden Rohrleitungen (30, 35) der Calcinierstufe (17).

In der Wirbelkammer (33), die nur einen vergleichsweise sehr geringen zusätzlichen Druckverlust verursacht, wird eine Strömungsrotation und intensive Vermischung der im aufsteigenden Rohrleitungsast (30) ankommenden Gas-Feststoffsuspension mit Luftsauerstoff aus dem Klinkerkühler erzwungen, was einen vollständigen Ausbrand bzw. vollständigen Restausbrand der im absteigenden Ast der Calcinierstufe (17) etwa noch vorhandenen Brennstoffe und damit einen hohen Calcinierungsgrad des Zementrohmehls gewährleistet.

Die Gastemperatur im Rohrleitungsbogen (31) der Calcinierstufe (17) beträgt gewöhnlich 850 bis 890° C. Im Zentrum der Wirbelkammer (33) wird eine feststoffreie bzw. feststoffarme ( staubarme ) Kernzone (36) mit erhöhter Temperatur von z. B. 900 bis 1.100° C geschaffen. In diese Kernzone (36) der Wirbelkammer (33) kann von deren Oberseite her eine Brennstoffzuführung (37) zur Einführung flüssigen oder gasförmigen Brennstoffs im Gleichstrom zu den Calcinatorabgasen einmünden. Diese zusätzliche Brennstoffzuführung (37) dient nicht zur Nachcalcinierung des Zementrohmehls, sondern zur Steuerung der Temperatur des Abgases in der Kernzone (36) der Wirbelkammer (33).

Nach einem besonderen Merkmal der Erfindung kann die in der Wirbelkammer (33) gelegene Kernzone (36) erhöhter Temperatur mit einer Einrichtung zur Eindüsung von Reaktanten wie NH₃ oder Ammoniakwasser zwecks zusätzlicher Absenkung des in den Abgasen enthaltenen NOₓ ausgestattet sein. Zu diesem Zweck kann die Gastemperatur in der Kernzone (36) der Wirbelkammer (33) auch auf einer noch höheren Reaktionstemperatur als z. B. ca. 1.000 bzw. 1.100° C gehalten werden. Bei dieser hohen Gastemperatur würden die Zementrohmehlteilchen an sich beginnen zu kleben und an den gasführenden Leitungen anzubacken. Diese Gefahr ist aber bei der Wirbelkammer (33) der erfindungsgemäßen Calcinniereinrichtung ausgeschlossen, weil infolge der kräftigen Rotationsströmung in der Wirbelkammer die Gutmaterialteilchen (38) an die Peripherie der Wirbelkammer (33) gedrängt sind, wo sie eine Temperatur bis höchstens 900° C erreichen. Durch diesen Zementrohmehlschleier (38) sind die Wände der Wirbelkammer (33) gleichzeitig vor einer überhöhten thermischen Beanspruchung geschützt. Die erhöhte Temperatur im Kernbereich (36) der Wirbelkammer (33) kann außerdem zum noch vollständigeren Umsatz des im Abgas noch vorhandenen CO zu CO₂ ausgenutzt werden.

Der freie zylindrische Querschnitt der Wirbelkammer (33) ist über ein an ihrer Unterseite angeordnetes Konusteil (39) auf den freien Querschnitt der Austragsöffnung (34) zum Austrag der verwirbelten Gas-Feststoffsuspension stark verjüngt, wodurch ein gutes Einstreuen des Zementrohmehlschleiers (38) abwärts in den zentralen Gasströmungswirbel erreicht wird.

Nach einem weiteren Merkmal der Erfindung können am Konusteil (39) der Wirbelkammer (33) Belüftungsdüsen (40) zur gezielten Feststoffausschleusung sowie eine Feststoffrezirkulationsleitung (41) in den aufsteigenden Ast (30) der Calcinierstufe (17) angeordnet sein, wodurch eine Verlängerung der Verweilzeit sowohl des zu calcinierenden Zementrohmehls als auch insbesondere der grobkörnigen schwerbrennenden Brennstoffanteile und deren vollständige Verbrennung noch innerhalb der Calcinierstufe (17) ermöglicht wird.

## Patentansprüche

1. Anlage zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird, und der Abgasstrom der Sinterstufe und der Abluftstrom der Kühlstufe aus dem Klinkerkühler getrennt oder gemeinsam in dem mit Brennstoff (26, 27) versorgten aufsteigenden Rohrleitüngs (30) der Calcinierstufe (17) zur Calcination des Rohmehls genutzt werden, wobei die Gas-Feststoff-Suspension in der Calcinierstufe (17) vom aufsteigenden Rohrleitungsast (30) in einen absteigenden Rohrleitungsast (35) umgelenkt und in den untersten Zyklon (28) des Zyklon-Vorwärmers zwecks Abtrennung des calcinierten Rohmehls (29) vom Gasstrom eingeführt wird, wobei in der Calcinierstufe (17) im Bereich ihrer Strömungsumlenkung eine Wirbelkammer (33) zur Vermischung der Gas-Rohmehl-Brennstoff-Suspension angeordnet ist, **dadurch gekennzeichnet, daß** die Wirbelkammer (33) in ihrem oberen Bereich eine Öffnung (32) zum tangentialen Eintritt der Gas-Rohmehl-Brennstoff-Suspension und an ihrer Unterseite eine zentrale Öffnung (34) zum Austrag der verwirbelten Gas-Feststoff-Suspension aufweist.

2. Anlage nach Anspruch 1, **dadurch gekennzeichnet, daß** der Durchmesser der Wirbelkammer (33) das 1,2- bis 2-fache des Durchmessers (d) der gasführenden Rohrleitungen (30, 35) der Calcinierstufe (17) beträgt.

3. Anlage nach den Ansprüchen 1 oder 2, **dadurch gekennzeichnet, daß** der freie zylindrische Querschnitt der Wirbelkammer (33) über ein an ihrer Unterseite angeordnetes Konusteil (39) auf den freien Querschnitt der Austragsöffnung (34) zum Austrag der verwirbelten Gas-Feststoffsuspension verjüngt ist ( von 1,2-bis 2 • d auf 1 • d).

4. Anlage nach einem der Ansprüche 1 bis 3, **dadurch gekennzeichnet, daß** in das Zentrum (36) der Wirbelkammer (33) von deren Oberseite her eine Brennstoffzuführung (37) einmündet.

5. Anlage nach Anspruch 4, **dadurch gekennzeichnet, daß** im feststoffreien bzw. feststoffarmen Zentrum (36) der Wirbelkammer (33) eine Temperaturmeßeinrichtung angeordnet ist, die mit der Brennstoffzuführung (37) in die Wirbelkammer (33) zwecks Aufrechterhaltung einer im Zentrum (36) der Wirbelkammer gelegenen Kernzone (36) erhöhter Temperatur in Wirkverbindung steht.

6. Anlage nach Anspruch 5, **dadurch gekennzeichnet, daß** die in der Wirbelkammer (33) gelegene Kernzone (36) erhöhter Temperatur mit einer Einrichtung zur Eindüsung von Reaktanten wie NH₃ oder Ammoniakwasser zwecks zusätzlicher Absenkung des in den Abgasen enthaltenen NOₓ ausgestattet ist.

7. Anlage nach einem oder mehreren der Ansprüche 1 bis 6, **dadurch gekennzeichnet, daß** in den aufsteigenden Ast der Calcinierstufe (17) in die Drehofenabgasleitung (22), bevor die vom Klinkerkühler (24) kommende Tertiärluft (25) zugemischt wird, ein Brenner (26) mit unterstöchiometrischer Brennstoffverbrennung einmündet zwecks Schaffung einer CO-haltigen Reduktionszone zur NOₓ-Reduktion im Abgas.

8. Anlage nach Anspruch 3, **dadurch gekennzeichnet, daß** am Konusteil (39) der Wirbelkammer (33) Belüftungsdüsen (40) sowie eine Feststoffrezirkulationsleitung (41) in den aufsteigenden Ast (30) der Calcinierstufe (17) angeordnet sind.

## Claims

1. Plant for the thermal treatment of powdery raw materials, especially in the manufacture of cement clinker from raw meal, wherein the raw meal is thermally treated in a burning process through prewarming, calcination, sintering and cooling, and the waste gas stream from the sintering stage and the waste air stream of the cooling stage from the clinker cooler are separately or together used in the pipeline branch (30), which is supplied with fuel (26, 27), of the calcining stage (17) for calcination of the raw meal, wherein the gas/solid matter suspension is diverted in the calcining stage (17) from the rising pipeline branch (30) into a descending pipeline branch (35) and is introduced into the lowest cyclone (28) of the cyclone prewarmer to separate the calcined raw meal (29) from the gas stream, there being a turbulence chamber (33) for mixing the gas/raw meal/fuel suspension arranged in the calcining stage (17) in the region of its flow diversion, **characterized in that** the turbulence chamber (33) has, in its upper region, an aperture (32) for the tangential entry of the gas/raw meal/fuel suspension and on its underside a central aperture (34) for the discharge of the vortexed gas/solid matter suspension.

2. A plant according to claim 1, **characterised in that** the diameter of the turbulence chamber (33) is 1.2 - 2-fold the diameter (d) of the gas-conducting pipes or conduits (30, 35) of the calcining stage (17).

3. A plant according to either claim 1 or 2, **characterised in that** the free cylindrical cross-section of the turbulence chamber (33) is tapered through a conical section arranged on its underside to the free cross-section of the discharge aperture (34) for the discharge of the vortexed gas-solid matter suspension (from 1.2 - 2.0 • d to 1 • d).

4. A plant according to any one of claims 1 to 3, **characterised in that** a fuel inlet (37) opens into the centre (36) of the turbulence chamber (33) from its upper side.

5. A plant according to claim 4, **characterised in that** a temperature measuring device is arranged in the centre (36) - with low or non-existent solid matter content - of the turbulence chamber (33), the said temperature measuring device being in effective connection with the fuel inlet (37) in the turbulence chamber (33) to maintain a core zone (36) of elevated temperature in the centre (36) of the turbulence chamber.

6. A plant according to claim 5, **characterised in that** the core zone (36) of elevated temperature in the turbulence chamber (33) is provided with a device for introducing reactants such as NH₃ or ammonium hydroxide via a nozzle to additionally reduce the level of NOₓ contained in the waste gases.

7. A plant according to one or more of claims 1 to 6, **characterised in that** a burner (26) with substochiometric fuel burning opens into the ascending branch of the calcining stage (17) in the rotary furnace waste gas line (22), before the tertiary air from the clinker cooler (24) is mixed in, in order to create a CO-containing reduction zone for the reduction of NOₓ in waste gas.

8. A plant according to claim 3, **characterised in that** ventilation nozzles (40) are arranged on the conical section (39) of the turbulence chamber (33) as well as a solid matter recirculation line (41) in the ascending branch (30) of the calcining stage (17).

## Revendications

1. Installation pour le traitement thermique de matériaux bruts sous forme de fines, notamment pour la fabrication de clinkers de ciment à partir de fines crues, les fines crues étant traitées thermiquement dans un processus de cuisson par préchauffage, calcination, frittage et refroidissement, tandis que le courant de gaz s'échappant de l'étage de frittage et le courant d'air s'échappant de l'étage de refroidissement à partir du refroidisseur du clinker sont utilisés séparément ou bien en commun pour la calcination des fines dans la branche tubulaire montante (30) de l'étage de calcination (17) alimentée en combustible (26, 27), la suspension de matières solides dans les gaz dans l'étage de calcination (17) est déviée de la branche montante (30) de la canalisation dans une branche descendante (35) et est introduite dans le cyclone le plus bas (28) du préchauffeur à cyclone pour séparer les fines calcinées (29) du courant de gaz, et tandis que, dans l'étage de calcination (17), au voisinage de sa déviation d'écoulement, est disposée une chambre de tourbillonnement (33) pour mélanger la suspension de fines et de combustible dans les gaz,
**caractérisée en ce que**
la chambre de tourbillonnement (33) comporte dans sa partie supérieure une ouverture (32) pour permettre l'entrée tangentielle de la suspension de fines et de combustible dans les gaz et sa partie inférieure comporte une ouverture centrale (34) pour l'extraction de la suspension de matières solides dans les gaz.

2. Installation selon la revendication 1,
**caractérisée en ce que**
le diamètre de la chambre de tourbillonnement (33) est supérieur de 1,2 à 2 fois au diamètre (d) des canalisations tubulaires (30, 35) dans lesquelles circulent les gaz de l'étage de calcination (17).

3. Installation selon la revendication 1 ou la revendication 2,
**caractérisée en ce que**
la section transversale cylindrique libre de la chambre de tourbillonnement (33) est rétrécie par l'intermédiaire d'une partie conique (39) disposée sur son côté inférieur à la section transversale libre de l'ouverture (34) pour l'extraction de la suspension de matières solides dans les gaz après tourbillonnement (soit de 1,2 d ou 2 d à 1 d).

4. Installation selon l'une des revendications 1 à 3,
**caractérisée en ce que**
dans le centre (36) et à partir du côté supérieur de la chambre de tourbillonnement (33) débouche dans celle-ci une alimentation en carburant (37).

5. Installation selon la revendication 4,
**caractérisée en ce que**
dans le centre (36) exempt de matières solides ou pauvre en matières solides de la chambre de tourbillonnement (33), est disposé un appareil de mesure de température qui est en liaison opérationnelle avec l'alimentation en carburant (37) dans la chambre de tourbillonnement (33), pour maintenir une température plus élevée d'une zone (36) placée dans le centre (36) de la chambre de tourbillonnement.

6. Installation selon la revendication 5,
**caractérisée en ce que**
la zone de température plus élevée (36) placée dans la chambre de tourbillonnement (33) est équipée d'un dispositif pour injecter des réactifs tels que NH₃ ou de l'eau ammoniacale pour abaisser de façon supplémentaire le NOₓ contenu dans les gaz d'échappement.

7. Installation selon l'une ou plusieurs des revendications 1 à 6,
**caractérisée en ce que**
dans la branche montante de l'étage de calcination (17) dans la canalisation (22) du four rotatif, avant que l'air tertiaire (25) provenant du refroidisseur de clinkers (24) soit ajouté au mélange, débouche un brûleur (26) à combustion de carburant sous-stoechiométrique pour créer une zone de réduction contenant du CO pour la réduction du NOₓ dans les gaz d'échappement.

8. Installation selon la revendication 3,
**caractérisée en ce que**
des buses d'aération (40) sont disposées sur la partie conique (39) de la chambre de tourbillonnement (33), et **en ce qu'**une canalisation de re-circulation (41) des matières solides est disposée sur la branche montante (30) de l'étage de calcination (17).
